# EUROPEAN PATENT APPLICATION

(11) **EP 2 290 832 A2**
(43) Date of publication of application: **02.03.2011**
(21) Application number: 10009986.0
(22) Date of filing: 02.07.2004
(51) Int. Cl.: H04B 1/707, G01S 19/29, G01S 19/30

(54) **GPS receiver with fast acquisition time**

(30) Priority: 03.07.2003 US 484737 P
(62) Divisional of application: 04741948.6
(71) Applicant: Qualcomm Incorporated, San Diego, CA 92121-1714 (US)
(72) Inventor: Piazza, Francesco, 6934 Bioggio (CH)
(74) Representative: Carstens, Dirk Wilhelm

(57) **Abstract**

Method for acquiring a plurality of GPS signals, in which the signals received from the space vehicles are correlated, in an array of parallel processing modules (20) with local replicas of a pseudorandom code. The local pseudorandom code generators are slewed periodically, on detection of an external periodical trigger INT-ACC, and the correlation data are dumped simultaneously to all processing modules in output registers for acquisition and tracking software. The integration period is shorter than the natural period of the pseudorandom code sequence, and all the local generators are slewed at the same time, thereby allowing a quicker acquisition of the SV C/A code.

## Description

### Reference Data

This patent application claims priority from US provisional patent application US60/484737, filed on July 3rd, 2003, which is hereby incorporated by reference.

### Field of the invention

Subject of the present invention is a navigation satellite receiver, and more particularly a GPS receiver circuit wherein the acquisition time, that is the time needed to obtain a first positional fix after a complete shutdown of the system is particularly low.

### Description of related art

GPS receiver system are nowadays used in a multitude of application, and it can be truly said that after a start phase, in which its applications were essentially confined to military, research, and few specialized fields, like maritime navigation, GPS is rapidly finding a place in many other professional and leisure applications.

As it is known, a GPS receiver is designed to determine its location by correlating the radio signal emitted from a constellation of space vehicles orbiting around the earth. It is a common problem with GPS receivers that they require a long start-up time before delivering a first positional fix after a cold start.

During this start-up time the receiver has to acquire the signal of the available space vehicles, and download the navigational data from the 50 bps GPS NAV stream or from other sources. These operations are inherently time-consuming, so that the start time after a cold start is commonly of the order of several tens of seconds.

This long start-up time, often indicated as time to the first fix (TTFF), is a limiting factor in many applications of GPS. In particular in certain low-rate, low power applications, like for example location services in portable telecommunication networks and the like, where it would be desirable to supply the GPS module only for short periods of time.

An object of the present application is a GPS receiver overcoming the above shortcoming of the prior art, and a GPS receiver providing a faster time for delivering a first positional fix

### Brief summary of the invention

The above object is attained by a GPS receiver comprising the characteristics of the appended claims, and in particular by Signal processor for use in a navigation satellite receiver, comprising a plurality of tracking modules, for processing a plurality of navigation ranging signals, each tracking module comprising:
- a pseudorandom code generator, for generating a replica code sequence;
- a correlator, for obtaining a time-integrated correlation value between a navigation ranging signal and said replica code sequence;
   wherein said signal processor has a first functioning mode, and said signal processor is arranged to simultaneously dump said time-integrated correlation values from said multiplicity of tracking modules when in said first functioning mode.

### Brief Description of the Drawings

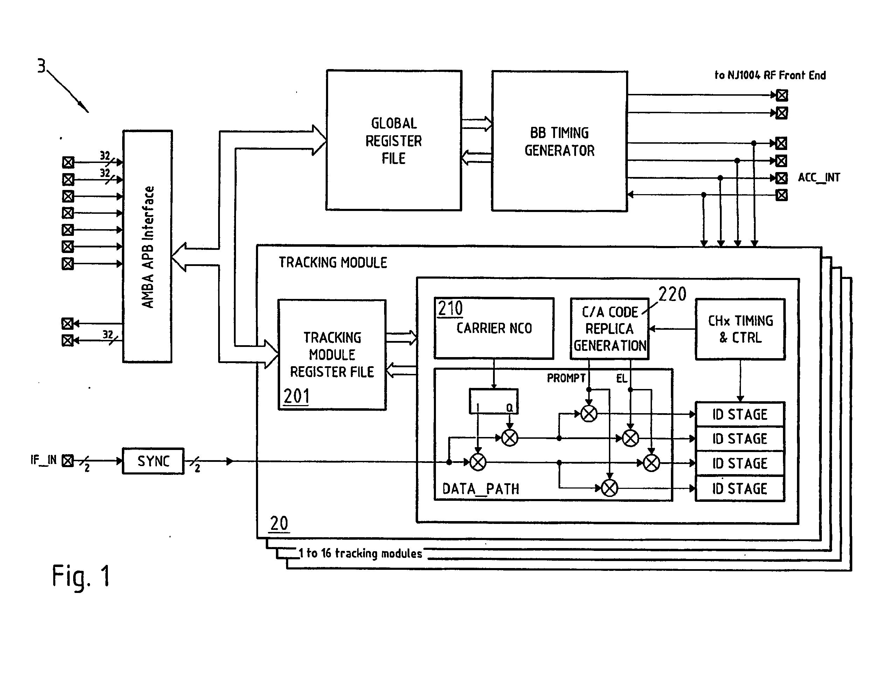

Figure 1 shows a GPS processor according to the present invention.

Fiqure 2 shows a timing diagram of a signal processor according to the present invention.

### Detailed Description of the Invention

In a typical GPS Receiver the 1575.42 MHz signal received from the Space Vehicles (SV) is down-converted to an intermediate frequency (IF), for example 4.092 MHz by an appropriate RF front-end. An example of a RF down-converter adapted to this function is described in European Patent Application EP 1'198'068, in the name of the applicant, which is hereby incorporated by reference.

The IF signal is then fed, among others, to a correlation processor 3 according to the invention, whose function is to de-spread the signals received from each SV, and to align them temporally with locally generated copies of the pseudorandom ranging codes specific for each SV, for example, in case of a GPS receiver, the correlation processor 3 has the task of demodulating and tracking the coarse acquisition (C/A) GPS ranging signals. To perform such alignment the correlators processor 3 comprises an array of tracking modules 20, each of which comprises two numerically controlled oscillators 210 and 220, for further converting the IF signal and generating a baseband signal.

Each tracking module 20 comprises also a local Gold pseudorandom code generator 220, for generating a local replica of the C/A code corresponding to a particular GPS Space Vehicle. The Gold pseudorandom codes can be generated internally, for example by a tapped shift register, or, equivalently, extracted from a preloaded table or by any other technique.

The Gold code generator 220 is piloted by an independent numerically controlled C/A clock at about 1.023 MHz. The exact frequency of the local carrier frequency as well as the local C/A code frequency are adjusted, by an external CPU (not shown), to compensate for Doppler shift on the SV signal and local oscillator drift and bias. The incoming IF signal is multiplied by the in-phase (I) and quadrature (Q) components of the local carder and by two time-shifted versions of the replica C/A code. The result of these operations is integrated for a programmable period of time, to generate an integrated correlation value, which is loaded into a tracking module register file 201 at the end of each integration period, to be accessible to the external CPU.

In addition to the prompt correlation value, the tracking module also generates a late correlation value and an early correlation value, which are obtained by multiplying the GPS signal with a ½ chip delayed and a ½ chip advanced version of the local replica code. These late and early correlation values are employed in the tracking algorithm, as it will be explained later.

The external CPU reads the correlation value stored in the registers 201 of each tracking module 20, and implements SV acquisition and tracking algorithms. In the first case the acquisition algorithm repeatedly shifts the replica C/A code generated in a tracking module 20, by issuing a series of "slew" commands to said tracking unit, until a sufficient correlation level is reached, whereupon the CPU switches to tracking mode. In order to speed up the acquisition and to reduce the load on the external CPU and on the bus, the tracking module can be instructed by the external CPU to autonomously slew the replica C/A code on a periodical basis, for example every 1, 2 or 4 C/A code periods.

In the tracking mode the external CPU stops the periodical slewing and continuously monitors the integrated correlation value, and also the early and late correlation values described above. By comparing the current, early and late correlation the CPU keeps the replica C/A code time-aligned with the C/A code coming from the Space Vehicle, by appropriately adapting the replica C/A code offset and the frequency of the C/A clock, as it is known in the art.

According to the tracking strategy chosen, the tracking module can also compute a difference between early and late correlation (early minus late or EML), or alternate between early, prompt and late correlations. All these modes of functioning can be selected by the CPU, for example by acting on appropriate registers in the register file 210, and are autonomously taken in charge by the tracking module 20, without the need to interfere with the C/A code generator 220.

During tracking, as long as the local and received C/A codes remain aligned, the 50 bps GPS navigation message can be extracted. At the same time the amount by which the replica C/A code must be shifted of keep is aligned with the incoming signal is proportional to the pseudo-range between the receiver ant one particular Space Vehicle. If at least four tracking modules 20 track four different space vehicles, and as soon as a sufficient portion of the navigation message has been downloaded, a positional fix is possible.

The complete start-up sequence, which is needed when the system is switched on without a previous knowledge of satellite orbit parameters, comprises then the two phases of:
1. Acquiring and tracking sufficient number of GPS C/A signals on several tracking modules, by delay-locking the locally generated C/A code with the incoming C/A codes. In principle a minimum of four satellites is needed, to solve the four unknown of the problem: latitude, longitude, altitude and time. A set of measurements is generated by the signal processor on each of the tracked signals.
2. Obtaining satellite orbit parameters and almanacs data. If this step is carried out by use of the GPS navigation data, it can be rather long, due to the low bandwidth of such signal. A minimum of 30 seconds is required for the transmission of a navigation frame. Since navigation data do not carry ranging information, they need not be downloaded from the space vehicle, however, and can also be obtained by other higher-bandwidth sources or, at least in part, stored in permanent or semipermanent tables inside the receiver.

The tracking module of the signal processor of the invention comprises also a special fast acquisition mode, whose aim is to speed up the acquisition phase 1 above.

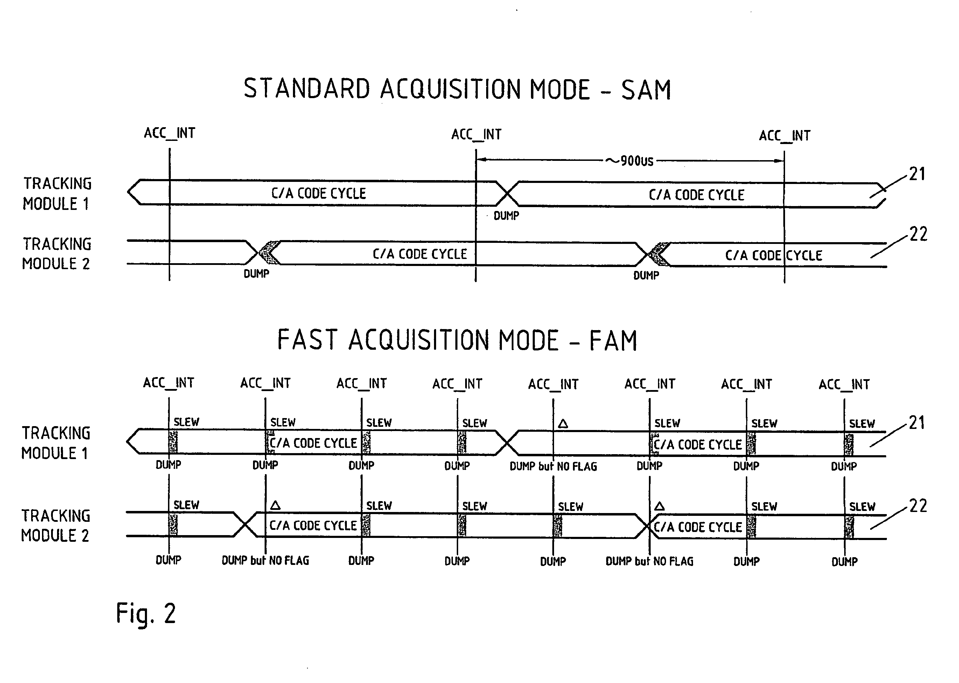

Figure 2 shows a time diagram of the fast acquisition mode (FAM) compared to the standard acquisition and tracking mode (SAM).

During standard acquisition mode the integrated correlation values in each tracking module are dumped into the output register at each C/A code overflow, that is the end of each C/A code period. In this way the correlation value is maximized. Dump times are therefore independent and uncorrelated for each tracking module, being only determined by the phase of the replica C/A code. The upper part of figure 2 shows the relative timing of two tracking modules, one of which 21, is in tracking mode, while the other 22, is in acquisition mode, with the C/A code slewed at each code overflow. The CPU reads periodically the register 210 of all the tracking modules 21, 22 in order to detect the completion of acquisition phases, and to implement the chosen tracking strategy. This is done in correspondence with the periodical interrupt ACC_INT.

The lower part of figure 2 illustrates the fast acquisition mode FAM. FAM differs from SAM in that the accumulated data is dumped into the registers 210 on the ACC_INT signal, which is common to all tracking modules, instead of on C/A code overflow. Therefore the length of the integration period in the tracking modules is determined by the ACC_INT period. By reducing the integration time it is possible to proportionally reduce the acquisition time of correlation data. A direct consequence of the reduced integration period, however, is that lover correlation levels are expected. The reduced integration time also increases the signal processor frequency bandwidth. As a consequence the scanning of the frequency space necessary during SV acquisition can be executed with larger steps (frequency bin). This further reduces the SV acquisition time. Only strong SV signals with a high signal-to noise ratio will produce reliable correlation values which can be detected in SAM mode. A cold start is the main application of SAM mode, during which an exhaustive search for all the available SV is made.

In FAM mode each tracking module 20 automatically detects whether a C/A code overflow occurred within the last integration period. In this case data is dumped normally, but a special flag bit in the register file 210 is utilized to signal this to the CPU. This avoids interpreting a data bit transition of the GPS signal during FAM integration (which would result in a very low correlation value) as a C/A code misalignment. By checking the flag bit the software running on the CPU can skip over this data.

As with SAM mode, the slew repeat option allows automatic slewing of the C/A code by 1 chip (or more) one each new ACC_INT. Software can check new correlation values with the slewed C/A code sequence without intervening with C/A code generation. Again, to avoid the effect of a GPS data bit transition, C/A code slewing is automatically inhibited (even with the slew repeat option enabled) in the integration following a C/A code overflow.

### FURTHER SUMMARY OF THE INVENTION

Signal processor for use in a navigation satellite receiver, comprising a plurality of tracking modules, for processing a plurality of navigation ranging signals, each tracking module comprising:
- a pseudorandom code generator, for generating a replica code sequence;
- a correlator, for obtaining a time-integrated correlation value between a navigation ranging signal and said replica code sequence;
   wherein said signal processor has a first functioning mode, and said signal processor is arranged to simultaneously dump said time-integrated correlation values from said multiplicity of tracking modules when in said first functioning mode.

The signal processor of 1, wherein said signal processor has a second functioning mode, and said signal processor is arranged to independently dump said time-integrated correlation values from said multiplicity of tracking modules, upon completion of a period of said replica code sequence, when in said second functioning mode.

The signal processor of 1, wherein said simultaneous dump of said time-integrated correlation values takes place on detection of an interrupt signal.

Signal processor according to one of the preceding , wherein said tracking modules are arranged to repeatedly temporally shift said replica code sequences until said replica code sequences are aligned with pseudorandom sequences contained in said navigation ranging signals.

The signal processor of 5, wherein said tracking modules comprise means to inhibit said temporal shift after completion of a period of said replica code sequence.

Signal processor according to one of the preceding , wherein said signal processor is arranged to monitor said time-integrated correlation values and to maintain an alignment condition between said replica code sequences and said pseudorandom sequences contained in said navigation ranging signals, by selectively temporally shifting said replica code sequences.

Signal processor according to one of the preceding , operatively arranged for selectively activating said first functioning mode at device start-up.

Signal processor according to one of the preceding , operatively arranged for selectively activating said first functioning mode when the strength of said navigation ranging signals exceeds a predefined value.

Signal processor according to one of the preceding , wherein said pseudorandom sequences are GPS C/A ranging codes.

GPS receiver, comprising a signal processor according to one of the preceding

Method for acquiring a plurality of navigation ranging signals from a plurality of space vehicles comprising the steps of:
- correlating said navigation ranging signals with one of a plurality of local signals generated by a plurality of pseudorandom code generators, for obtaining a plurality of time-integrated correlation values;
- slewing said pseudorandom code generators until said local signals are time-aligned with pseudorandom signals contained in said navigation ranging signals; whereas said slewing of said pseudorandom code generators takes place simultaneously and periodically for all said code generators, with a repetition period which is shorter than the proper period of said local signals.

## Claims

1. An apparatus for use in a navigation satellite receiver, comprising:
a plurality of tracking modules, for processing a plurality of navigation ranging signals, at least one of said plurality of tracking modules comprising:
a pseudorandom code generator to generate a replica code sequence;
a correlator to obtain a time-integrated correlation value based, at least in part, on a navigation ranging signal and said replica code sequence; and
a register that is responsive to a signal processor operating in first functioning mode to dump said time-integrated correlation values associated with an integration period that is less than a code cycle period associated with said navigation ranging signal, said integration period being concurrently applied to two or more of said plurality of tracking modules.

2. The apparatus of claim 1, wherein said signal processor has a second functioning mode, and said signal processor is arranged to independently dump said time-integrated correlation values from said multiplicity of tracking modules, upon completion of a period of said replica code sequence, while in said second functioning mode.

3. The apparatus of claim 1, wherein said simultaneous dump of said time-integrated correlation values takes place on detection of an interrupt signal.

4. The apparatus of claim 1, wherein said plurality of tracking modules to further selectively temporally shift said replica code sequences to align said replica code sequences with pseudorandom sequences in said navigation ranging signals.

5. The apparatus of claim 4, wherein said plurality of tracking modules to further selectively inhibit a temporal shift after completion of said code cycle period.

6. A method for use in a navigation satellite receiver, the method comprising:
in a first mode of operation, concurrently obtaining correlation values from two or
more tracking modules, said correlation values being associated with an integration period that is less than a code cycle period associated with a navigation satellite signal.

7. The method of claim 6, wherein said two or more tracking modules comprise code generators capable of being slewed, and wherein the method further comprises:
in at least said first mode of operation, selectively slewing at least one of said code generators in response to obtaining said correlation values.

8. The method of claim 6, wherein selectively slewing said at least one of said code generators in response to obtaining said correlation values further comprises:
selectively slewing said at least one of said code generators based, at least in part, on a flag value associated with an overflow state of said at least one of said code generators.

9. The method of claim 6, further comprising:
in a second mode of operation, concurrently obtaining second correlation values from said two or more tracking modules, said second correlation values being associated with an integration period that is at least equal to said code cycle period.

10. The method of claim 9, further comprising, at least one of:
selectively initiating said first mode of operation at a start-up of said navigation satellite receiver; and/or
selectively initiating at least one of said first mode of operation and/or said second mode of operation based, at least in part, on a measured strength of at least one navigation ranging signal.

11. An apparatus for use in a navigation satellite receiver, the apparatus comprising:
a plurality of means for tracking one or more navigation ranging signals; and means for operating in a first mode of operation by concurrently obtaining correlation values from two or more of said plurality of means for tracking said one or more navigation ranging signals, said correlation values being associated with an integration period that is less than a code cycle period associated with said one or more navigation satellite signals.

12. The apparatus of claim 11, further comprising:
means for selectively slewing a generated code used in at least one of said plurality of means for tracking said one or more navigation ranging signals in response to obtaining said correlation values.

13. The apparatus of claim 11, further comprising:
means for identifying an overflow state of at least one of said plurality of means for tracking said one or more navigation ranging signals; and
means for selectively slewing a generated code used in at least one of said plurality of means for tracking said one or more navigation ranging signals based, at least in part, on said overflow state.

14. The apparatus of claim 11, further comprising:
means for operating in a second mode of operation by concurrently obtaining second correlation values from said two or more of said plurality of means for tracking said one or more navigation ranging signals, said second correlation values being associated with an integration period that is at least equal to said code cycle period.

15. The apparatus of claim 14, further comprising, at least one of:
means for selectively initiating said first mode of operation at a start-up of said navigation satellite receiver; and/or
means for selectively initiating at least one of said first mode of operation and/or said second mode of operation based, at least in part, on a measured strength of at least one of said one or more navigation satellite signals.
